Europäisches Patentamt

(19) European Patent Office

Office européen des brevets

(11) Numéro de publication: **0 016 712**
**B1**

(12) **FASCICULE DE BREVET EUROPEEN**

(45) Date de publication du fascicule du brevet:
08.12.82

(21) Numéro de dépôt: **80400405.9**

(22) Date de dépôt: **26.03.80**

(51) Int. Cl.³: **A 01 D 23/06**, A 01 D 35/264,
A 01 D 33/02

(54) Machine à effeuiller et décolleter les betteraves ou les plantes comparables.

(30) Priorité: **27.03.79 FR 7907635**

(43) Date de publication de la demande:
**01.10.80 Bulletin 80/20**

(45) Mention de la délivrance du brevet:
**08.12.82 Bulletin 82/49**

(84) Etats contractants désignés:
**AT BE CH DE GB IT NL**

(56) Documents cités:
**DE-A-2 740 626**
**FR-A-1 561 194**
**FR-E-94 524**
**GB-A-1 519 595**
**US-A-2 759 318**
**US-A-3 306 017**

(73) Titulaire: **W. & J.M. DEHONDT, Crasville-la-Mallet,
F-76450 Cany Barville (FR)**

(72) Inventeur: **Dehondt, Willy, Crasville-la-Mallet,
F-76450 Cany Barville (FR)**

(74) Mandataire: **Collignon, Pierre et al, Cabinet
Collignon 6, rue de Madrid, F-75008 Paris (FR)**

BUNDESDRUCKEREI BERLIN

## Machine à effeuiller et décolleter les betteraves ou les plantes comparables

La présente invention concerne une machine à effeuiller les betteraves ou les plantes comparables en récoltant les feuillages coupés et éventuellement à décolleter les betteraves ou racines analogues. Bien que prévue plus particulièrement pour les betteraves, la machine peut s'appliquer avantageusement à toutes les plantes à racines comparables par exemple aux endives, à la chicorée, aux céleris raves, aux carottes.

L'opération précédant l'arrachage des plantes à racines consiste à couper les feuilles et à couper franchement le collet de la plante pour s'opposer à la végétation de cette plante en silo.

Cette opération délicate est réalisée avec plus ou moins de réussite par des effeuilleuses à un rotor ou à deux rotors auxquelles on ajoute un dispositif dit de scalpage pour le décolletage qui peut aussi se faire par des machines indépendantes dites décolleteuses. Dans tous les cas, le produit coupé est transporté sur le côté de la machine et utilisé soit sous forme d'engrais vert, soit pour la nourriture des animaux.

Les effeuilleuses à un rotor de type connu sont constituées par un châssis supportant un arbre transversal dont la longueur est égale ou supérieure à la largeur de la zone à récolter et sur lequel sont montés des couteaux ou fléaux. Le rotor ainsi constitué tourne en opposition à l'avancement, c'est-à-dire que sa moitié inférieure tourne vers l'avant, et un carénage adapté permet de contenir le produit haché, puis de le déposer sur une vis sans fin qui évacue transversalement le produit de l'effeuillage.

Les effeuilleuses à deux rotors sont de conception identique à ceci près que le deuxième rotor, placé en arrière du premier, est un arbre transversal sur lequel on a disposé des fléaux en caoutchouc. Ce deuxième rotor, qui tourne indifféremment en opposition à l'avancement ou en concordance, a pour rôle d'éliminer les pétioles et les feuilles mortes adhérant aux collets.

Dans les deux cas des machines à un rotor et des machines à deux rotors, le travail obtenu est un eddeuillage plan suivant la direction transversale par rapport à la direction de l'avancement et un effeuillage au profil du terrain sur lequel prennent appui les roues de jauge suivant la direction de l'avancement de la machine. Il est connu que les parties aériennes d'une population de betteraves ne présentent pas les mêmes caractéristiques de levée et de développement, de sorte que la qualité du travail effectué reste aléatoire: on trouve après effeuillage un pourcentage notable de betteraves décapitées ou, à l'inverse, insuffisamment effeuillées.

Pour compléter le travail obtenu, on ajoute à ces matériels des dispositifs connus dits scalpeurs constitués par des peignes fins qui prennent appui sur le sommet effeuillé des betteraves et auxquels sont associés des couteaux en dessous et en retrait des peignes pour trancher une épaisseur déterminée dans le collet de chaque betterave. L'ensemble constitué par un peigne et le couteau associé est monté sur un parallélogramme et l'avancement de l'ensemble d'effeuillage fait passer le peigne sur chaque sommet de betterave.

Cette solution, bien qu'améliorant considérablement le travail d'une effeuilleuse, comporte des aléas fréquents, l'ensemble couteau-peigne étant très souvent rendu inactif par la présence d'herbes, de racines ou de feuilles mortes qui sont coincées sur le couteau.

Le travail réalisé avec une effeuilleuse à deux rotors est d'une finition plus satisfaisante que celui réalisé avec une machine à un rotor parce que les fléaux en caoutchouc du deuxième rotor débarrassent les betteraves des feuilles mortes en facilitant ainsi le travail des scalpeurs situés en arrière des deux rotors.

La puissance absorbée par une effeuilleuse est considérable et croît avec l'augmentation de la vitesse d'avancement de la machine. Cette piussance est de l'ordre de 40 à 50 chevaux pour une machine à un rotor et de 50 à 70 chevaux pour une machine à deux rotors.

On connaît aussi des machines dites décolleteuses constituées par un châssis reposant sur deux roues à crans et portant des roues de jauge indépendantes roulant sur les sommets des betteraves, chaque roue de jauge recevant un mouvement de rotation à partir des roues porteuses par l'intermédiaire de pignons et de chaînes. Placés en position oblique sous chaque roue de jauge, les couteaux de décolletage sont réglables verticalement par rapport à leur roue de jauge respective selon l'épaisseur de collet à couper.

La différence existant entre les décolleteuses et les équipements dits scalpeurs se manifeste surtout pour le contrôle de la hauteur de la betterave à décolleter. Dans le cas des décolleteuses, les roues de jauge sont commandées par chaînes depuis les roues porteuses à crans et tournent à une vitesse périphérique très légèrement supérieure à la vitesse d'avancement tandis que les scalpeurs sont équipés de peignes qui frottent sur les betteraves. Le tâteur rotatif commandé présente une inertie moindre pour grimper sur chaque betterave et en descendre et la vitesse périphérique du tâteur, légèrement supérieure à la vitesse d'avancement, éjecte du couteau l'ensemble du collet et des feuilles. l'utilisation des tâteurs rotatifs rend les bourrages moins fréquents et contribue à amener une précision dans le travail puisque c'est le sommet de la betterave qui sert de référence pour déterminer le niveau de la coupe. Toutefois la qualité du travail est aléatoire lorsqu'il s'agit d'une population de betteraves clairsemée ou irrégulière ou lorsque la végétation parasite est importante.

La décolleteuse dont il est question ci-dessus est obligatoirement combinée à un récupérateur de vert composé d'un châssis sur roues supportant, perpendiculairement à l'axe d'avancement, un barillet à quatre peignes et une vis de transport qui évacue les produits coupés vers un côté de la machine. Les collets jonchant le sol après le travail de la décolleteuse sont repris par les dents des peignes du récupérateur, déposés sur la vis de transport et évacués par elle vers un côté de la machine.

On connait encore, par le document US-A-3 306 017, une machine à décolleter les betteraves comprenant deux plateaux de coupe tournants disposés transversalement et combinés avec des déflecteurs qui dirigent les têtes coupées en un espace situé entre les plateaux, ainsi qu'un système de nettoyage par fléaux disposé en arrière des plateaux tournants. Par le document FR-A-1 561 194 il est aussi connu une machine à décolleter les betteraves comprenant un plateau de coupe tornant qui est combiné avec un déflecteur rotatif vertical assurant le chargement des déchets de décolletage sur un transporteur. Enfin, par le document DE-A-2 740 626, on connait une machine à effeuiller les betteraves dans laquelle les feuilles coupées sont projetées sur des rotors alignés qui se transmettent latéralement ces produits.

La présente invention a pour objet une machine perfectionnée d'effeuillage permettant simultanément l'effeuillage, le décolletage et la mise en andain des verts de betteraves et caractérisée essentiellement par le fait que des couteaux ou segments d'effeuillage sont portés par les périphéries de plateaux tournants qui sont alignés transversalement par rapport à la direction d'avancement de la machine et qui en outre tournent dans le même sens de façon à transférer les feuilles transversalement d'un plateau à l'autre en les déchargeant en andain sur le sol d'un côté de la machine. Ces plateaux peuvent être en un nombre deux fois moindre que le nombre de rangs de betteraves à effeuiller à la fois, chaque plateau pouvant amener par sa rotation ses couteaux sur deux rangs consécutifs de betteraves. Les plateaux en question sont avantageusement inclinés en descente vers l'avant.

A l'arrière des plateaux ci-dessus la machine peut comporter un tambour de nettoyage des surfaces effeuillées, ce tambour étant constitué par un axe supportant des battes en caoutchouc. Enfin à l'arrière du tambour de nettoyage, la machine selon l'invention peut comprendre des éléments décolleteurs composés des bras supportant les tâteurs rotatifs et des couteaux associés.

Pour bien faire comprendre l'invention, on en décrira ci-après plus en détails un exemple d'exécution en référence au dessin schématique annexé, dans lequel:

la figure 1 représente la partie avant de la machine en plan;

la figure 2 représente la partie arrière en plan;

la figure 3 est une vue de profil de la machine; et

la figure 4 représente la machine vue de face.

La machine représentée est portée par un châssis 1 réglable en hauteur par rapport au sol 2 sur lequel la machine se déplace. Ce châssis est muni de roues avant porteuses 3 et 4 disposées de façon à rouler dans la même voie que le tracteur qui pousse la machine et auquel le châssis 1 est attelé au moyen de liaisons de type connu comprenant par exemple deux liaisons avant 6 – 7 et une liaison arrière 8. Le réglage en hauteur du châssis 1 par rapport au sol 2 est obtenu par des systèmes à vis et écrou commandés par des manivelles 9 et 10 pour agir sur les roues 3 et 4.

La machine comprend vers l'avant un deuxième châssis 11 supporté transversalement par le châssis 1 au moyen de broches d'axe horizontal 12. Ce châssis transversal 11 est prolongé vers le haut par des bras 13 servant à son orientation autour de l'axe 12. A cet effet chacun des deux bras 13 supporte un écrou-tourillon 14 dans lequel est engagée une vis épaulée 15 qui prend appui sur le châssis 1 par la rotule 16 et qui est actionnée par la manivelle 17 en permettant le pivotement du châssis 11 autour des axes 12.

Le châssis mobile 11 supporte trois boîtiers à roulement disposés suivant un axe sensiblement vertical et traversés par des axes 19 supportant à leur partie inférieure des plateaux en alignement transversal indiqués en 20-20a-20b. A leurs extrémités supérieures, ces axes portent des pignons 21-21a-21b et la fixation des plateaux et des pignons sur les arbres 19 est assurée par des moyens connus.

Le châssis mobile 11 comprend aussi un déflecteur de guidage du produit à récolter. Ce déflecteur, indiqué en 22, forme une paroi transversale verticale s'étendant au-dessus des plateaux qui tournent tous dans le même sens indiqué par des flèches sous l'action d'un mécanisme d'entraînement qu'on exposera ci-après. La partie avant des plateaux tournant vers la droite, le déflecteur présente sur les parties de gauche des plateaux de droite 20a et 20b une ouverture indiquée respectivement en 23 et en 24 de sorte que les produits peuvent être entraînés vers l'avant par les moitiés de gauche des plateaux mais non être ramenés en arrière par les moitiés de droite de ces plateaux où ils rencontrent le déflecteur contre lequel ils glissent pour passer sur le plateau suivant ou tomber sur le sol à partir du plateau extrême de droite.

A l'arrière du châssis d'effeuillage 11, la machine comprend encore un châssis transversal 25 fixé au châssis porteur 1 par un assemblage boulonné. Le châssis 25 est prolongé vers le bas par deux bras 26 supportant l'axe formant rotor 27 sur lequel sont disposées les battes en caoutchouc 28.

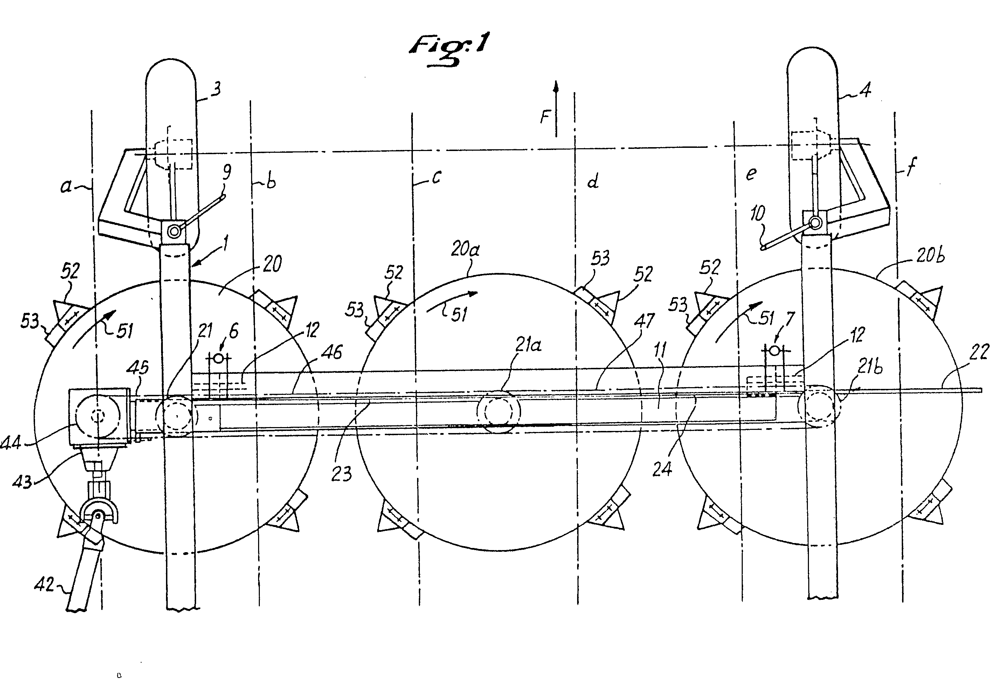

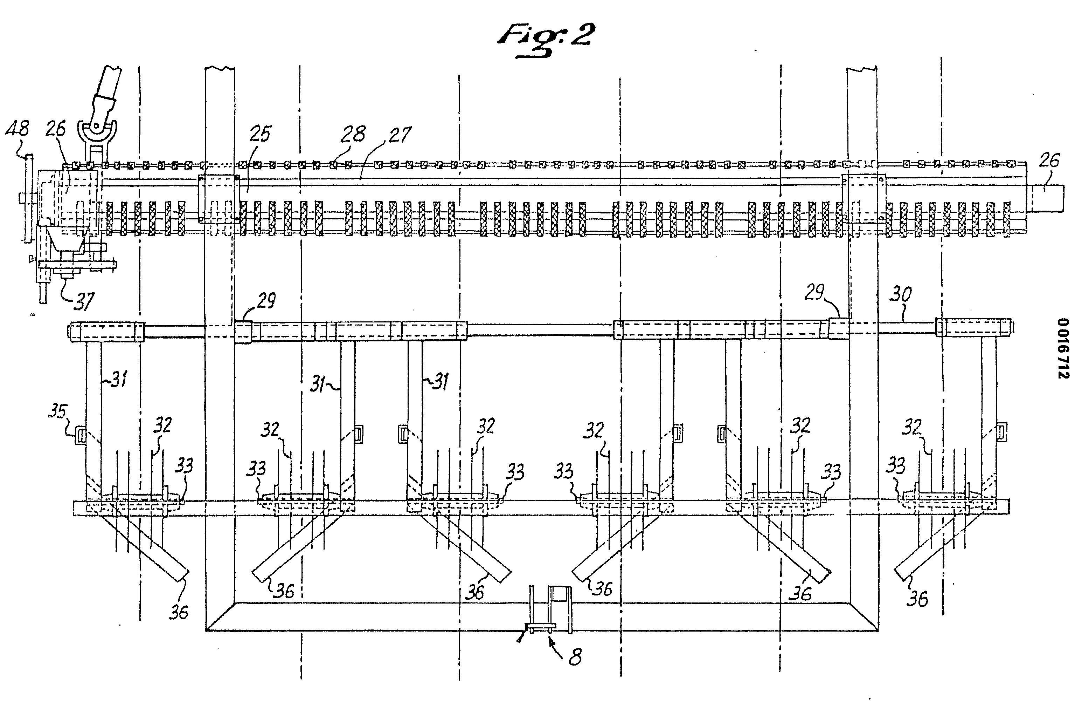

Enfin, à l'arrière du châssis 25, le châssis porteur 1 comporte à sa partie arrière des supports 29 reliés entre eux par un axe transversal 30 supportant les bras 31 de tâteurs en nombre égal au nombre de rangs effeuillés simultanément par un passage de machine (six dans l'exemple représenté). Chaque bras 31, articulé sur l'axe 30, porte un tâteur à pointes 32 monté sur un axe 33 perpendiculaire à l'axe d'avancement. Un support de couteau 34 réglable verticalement dans un coulisseau 35 reçoit un couteau 36 disposé en dessous et en oblique par rapport au tâteur 32. Sur les figures 1 et 2, les six rangs de betteraves à effeuiller simultanément ont été schématisés par les six lignes a-b-c-d-e-f selon la direction de l'avancement.

La machine comprend des moyens assurant la rotation des plateaux 20-20a-20b et de l'axe rotor 27. Ces moyens peuvent comprendre un moteur et des transmissions appropriées mais le moteur est avantageusement remplacé par la prise de force du tracteur attelé à la machine. Cette prise de force est reliée, dans l'exemple d'exécution représenté au dessin, à l'axe d'un boîtier 37 qui actionne, par l'intermédiaire d'un pignon 38 et d'une chaîne 39, un autre pignon 40 calé sur un arbre 41 et celui-ci reçoit à son extrémité un arbre coulissant à cardans 42 relié à un renvoi d'angle 43 dont le pignon de sortie 44 transmet le mouvement à une chaîne 45 et au plateau 20 par l'intermédiaire du pignon double 21 et de l'arbre 19. Une chaîne 46 reçoit son mouvement du pignon double 21 pour entraîner le pignon double 21a qui transmet le mouvement au plateau 20a par son arbre 19 tandis qu'une chaîne 47 actionnée par le pignon double 21a entraîne encore le pignon 21b et le plateau 20b par son arbre 19.

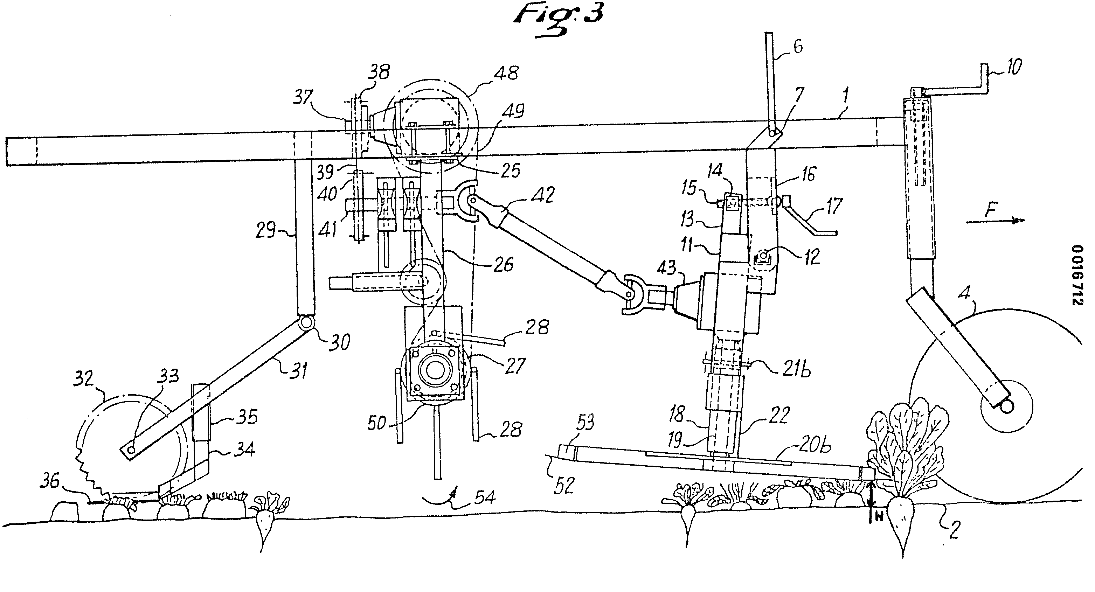

Sur l'arbre de sortie du boîtier 37, un pignon 48 (figure 3) commande une chaîne 49 qui actionne un pignon 50 et l'arbre formant rotor 27 claveté au pignon 50.

La machine qu'on vient de décrire repose sur le sol 2. Elle est attelée à un tracteur (non représenté) qui la déplace dans le sens de la flèche F et anime, depuis l'axe du boîtier 37, les plateaux 20-20a-20b dans le sens de rotation 51, de sorte que les couteaux 52 disposés autour des plateaux 20-20a-20b sur des supports inclinés 53 coupent les feuilles à une hauteur H qui tient compte de la hauteur maximale de la partie aérienne des betteraves. Les feuilles coupées sont déposées sur les plateaux 20-20a-20b. Le sens de rotation 51 des plateaux 20-20a-20b favorise le déplacement vers la droite de la machine des feuilles coupées. Le transfert des feuilles se fait par glissement contre le déflecteur 22 dû à la fois au sens de rotation du plateau 20 et à la force centrifuge appliquée aux feuilles par la rotation du plateau. Les supports inclinés 53, formant palettes de projection, facilitent la réception des feuilles coupées sur les plateaux. Le transfert des feuilles du plateau 20 au plateau 20a se fait en avant de l'ouverture 23 ménagée dans le déflecteur 22 au-dessus de la moitié de gauche du plateau 20a; à cet endroit, les feuilles s'écartent du déflecteur 22 vers lequel elles sont ramenées par la rotation du plateau 20a dans le secteur formé par le quart avant de droite de ce plateau. Les feuilles ainsi ramenées contre le déflecteur 22 avec celles coupées par le plateau 20a glissent contre ce déflecteur et passent ainsi sur le plateau 20b en avant de l'ouverture 24. Ces feuilles s'écartent à nouveau du déflecteur 22 pour y revenir dans le quart avant de droite du plateau 20b sur le déflecteur 22 qui s'étend jusqu'à la périphérie du plateau 20b ou un peu au-delà. Ces feuilles tombent alors au sol en dehors de la zone de travail de la machine.

Derrière les plateaux effeuilleurs 20-20a-20b, le rotor 27 tourne dans le sens 54 en opposition à l'avancement qui s'effectue selon la flèche F et ses battes de caoutchouc 28 fouettent les sommets des betteraves pour détacher de celles-ci les feuilles adhérentes et les feuilles basses qui n'ont pas été effeuillées. Le produit ainsi récolté est projeté sur la partie arrière des plateaux 20-20a-20b qui les entraîne en avant par la partie de gauche sans déflecteur du plateau 20 ou par les parties de gauche des plateaux 20a-20b respectivement à travers les ouvertures 23-24 du déflecteur 22, de sorte que ce produit se joint aux feuilles coupées par les couteaux des plateaux et est transféré avec elles de gauche à droite jusqu'à son déversement sur le sol.

En arrière de l'arbre rotor 27, les tâteurs à pointes 32, tournant librement sur leurs axes 33, roulent sur les têtes de betteraves et l'articulation des bras 31 sur l'axe 30 permet aux tâteurs de suivre exactement le profil de la plantation. Le couteau 36 situé au-dessous et en arrière de chaque tâteur 32 tranche un collet à l'épaisseur souhaitée, déterminée par le réglage du coulisseau 35.

On comprendra que l'exemple d'exécution de l'invention décrit ci-dessus et représenté au dessin annexé n'a aucun caractère limitatif et qu'on pourrait prévoir tous aménagements désirables sans sortir du cadre de l'invention. En particulier, la machine pourra être dotée de skis de guidage dans les rangs. Elle pourra aussi ne pas comporter de dispositifs de décolletage. Elle pourra également être équipée de dispositifs pour récolter les collets jonchant le sol, ces dispositifs pouvant être constitués par des tambours d'axe vertical ou horizontal équipés de dents ou de battes en caoutchouc. Enfin, au lieu d'être poussée à l'avant d'un tracteur, elle pourra être tirée par un tracteur.

## Revendications

1. Machine d'effeuillage de betteraves ou de plantes comparables et de récolte des feuilles, comprenant des plateaux tournants (20, 20a, 20b) alignés transversalement par rapport à la direction d'avancement de la machine et dont les axes de rotation sont légèrement inclinés vers l'avant par rapport à la verticale, lesdits plateaux tournants présentent sur leurs périphéries des couteaux ou segments d'effeuillage (52), caractérisée par le fait que lesdits plateaux (20, 20a, 20b) tournent tous dans le même sens et qu'un déflecteur vertical transversal fixe (22) s'étend au-dessus des plateaux (20, 20a, 20b), ledit déflecteur présentant des ouvertures (23, 24) appropriées pour canaliser le produit coupé par les plateaux d'effeuillage.

2. Machine d'effeuillage selon la revendication 1, caractérisée par le fait que chaque couteau (52) de plateau effeuilleur se trouve devant une palette inclinée (53) qui relève les feuilles coupées en facilitant leur réception par le plateau (20, 20a, 20b) correspondant.

3. Machine selon la revendication 1 ou la revendication 2, caractérisée par le fait qu'elle porte à l'arrière des plateaux d'effeuillage (20, 20a, 20b) un rotor transversal (27) de nettoyage des collets effeuillés projetant sur lesdits plateaux les matières enlevées des collets de betteraves par des battes (28) en caoutchouc ou en matière équivalente portées par ce rotor.

4. Machine selon la revendication 3, caractérisée par le fait que le rotor (27) de nettoyage équipé de battes (28) tourne en opposition à l'avancement.

5. Machine selon l'une quelconque des revendications 1 à 4, caractérisée par le fait que lesdites ouvertures (23, 24) ménagées dans le déflecteur (22) sont disposées au-dessus des moitiés des plateaux (20, 20a, 20b) qui tournent vers l'avant de la machine.

6. Machine selon l'une quelconque des revendications précédentes, caractérisée par le fait qu'elle est équipée à son extrémité arrière de dispositifs de décolletage (31 à 36).

**Patentansprüche**

1. Maschine zum Entlauben und Köpfen von Runkelrüben oder ähnlichen Pflanzen und zum Ernten von Blättern, bei der drehbare Scheiben, deren Drehachsen leicht aus der Vertikalen nach vorn geneigt sind, in Querrichtung zur Vortriebsrichtung der Maschine angeordnet sind und die an ihrem Umfang Entlaubungsmesser oder -segmente aufweisen, dadurch gekennzeichnet, daß die Scheiben (20, 20a, 20b) in gleichem Sinn wie ein vertikal und transversal befestigtes Ablenkorgan (22) drehbar sind, das sich oberhalb der Scheiben (20, 20a, 20b) erstreckt, und Öffnungen (23, 24) zum Abführen, Ableiten oder dergleichen Kanalisieren des Schnittgutes über die Entlaubungsscheiben aufweisen.

2. Maschine nach Anspruch 1, gekennzeichnet, daß sich jedes Messer (52) der Entlaubungsscheibe vor einer geneigten Schaufel (53) befindet, welche die abgeschnittenen Blätter aufnimmt und damit deren Aufnahme durch die entsprechende Scheibe (20, 20a, 20b) erleichtert.

3. Maschine nach Anspruch 1 oder 2, dadurch gekennzeichnet, daß sie hinter den Entlaubungsscheiben (20, 20a, 20b) ein Querflügelrad (27) zum Reinigen der entlaubten Rübenköpfe aufweist, welches das von den Rübenköpfen abgenommene Material mittels von dem Flügelrad gehaltenen Stampfern (28) aus Kautschuk oder entsprechendem Material auf die Scheiben wirft.

4. Maschine nach Anspruch 3, dadurch gekennzeichnet, daß das mit Stampfern (28) ausgerüstete, zum Reinigen dienende Flügelrad (27) entgegen der Vortriebsrichtung drehbar ist.

5. Maschine nach einem der Ansprüche 1—4, dadurch gekennze:.'nnet, daß die im Ablenkorgan (22) angeordneten Öffnungen (23, 24) oberhalb der Hälften der Scheiben (20, 20a, 20b) angebracht sind, die sich zum vorderen Ende der Maschine hin drehen.

6. Maschine nach einem der vorhergehenden Ansprüche, dadurch gekennzeichnet, daß an deren hinteren Ende Köpfvorrichtungen (31 bis 36) angeordnet sind.

**Claims**

1. Machine for defoliating beet or comparable crops and for collecting the leaves, including rotatable plates which are transversely aligned with regard to the direction of advance of the machine and of which the axes of rotation are slightly inclined to the front with reference to the vertical, the said rotatable plates having peripheral blades or defoliating segments, characterised in that the said plates (20, 20a, 20b) all rotate in the same sense and in that a fixed vertical transverse deflector (22) extends above the plates (20, 20a, 20b), the said deflector having openings (23, 24) arranged to channel the product cut by the defoliating plates.

2. Defoliating machine according to claim 1, characterised by the fact that each blade (52) of the defoliating plate is located in front of an inclined guide plate (53), which lifts the cut leaves, facilitating their reception by the corresponding plate (20, 20a, 20b).

3. Machine according to Claim 1 or Claim 2, characterised by the fact that it carries behind the defoliating plates (20, 20a, 20b) a transverse rotor (27) for cleaning the defoliated necks, projecting onto the plates the material removed from the necks of the roots by the beaters (28) of rubber or an equivalent material carried by this rotor.

4. Machine according to Claim 3, characterised by the fact that the cleaning rotor (27) provided with beaters (28) turns in a direction opposite to the direction of advance.

5. Machine according to any one of Claims 1 to 4, characterised in that the said openings (23, 24) provided in the deflector (22) are disposed above the halves of the plates (20, 20a, 20b) which turn towards the front of the machine.

6. Machine according to any of the preceding claims, characterised by the fact that it is provided at its rear extemeity with apparatus (31 to 36) for cutting off the tops of the roots.

Fig.1

Fig. 2

0016712

Fig. 3

0016712